(19) **Europäisches Patentamt European Patent Office Office européen des brevets**

(11) **EP 3 078 227 B1**

(12) **EUROPEAN PATENT SPECIFICATION**

(45) Date of publication and mention of the grant of the patent:
**06.07.2022 Bulletin 2022/27**

(21) Application number: **13898525.4**

(22) Date of filing: **06.12.2013**

(51) International Patent Classification (IPC):
**H04L 27/14** *(2006.01)* **H04L 27/00** *(2006.01)*
**H04L 25/02** *(2006.01)* **H04L 27/26** *(2006.01)*
**H04J 11/00** *(2006.01)*

(52) Cooperative Patent Classification (CPC):
**H04L 27/0014; H04J 11/0036; H04L 27/2657;**
H04L 25/0238; H04L 2027/0026; H04L 2027/0048;
H04L 2027/0065

(86) International application number:
**PCT/CN2013/001513**

(87) International publication number:
**WO 2015/081458 (11.06.2015 Gazette 2015/23)**

(54) **INTERFERENCE AID FREQUENCY OFFSET ESTIMATION FOR USER EQUIPMENT**

SCHÄTZUNG DES INTERFERENZHILFSFREQUENZVERSATZES FÜR BENUTZERVORRICHTUNG

ESTIMATION DE DÉCALAGE DE FRÉQUENCE D'AIDE AU BROUILLAGE POUR UN ÉQUIPEMENT UTILISATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**12.10.2016 Bulletin 2016/41**

(73) Proprietor: **Apple Inc.**
**Cupertino, CA 95014 (US)**

(72) Inventors:
• **ZHANG, Hong**
**Xi'an**
**Shaanxi 710075 (CN)**
• **LEI, Jie**
**Xi'an**
**Shaanxi 710075 (CN)**
• **FU, Yangzeng**
**Xi'an**
**Shaanxi 710075 (CN)**
• **TANG, Yunshuai**
**Xi'an**
**Shaanxi 710075 (CN)**
• **WANG, Zhen**
**Xi'an**
**Shaanxi 710075 (CN)**

• **JIA, Zhuanni**
**Xi'an**
**Shaanxi 710075 (CN)**
• **LI, Lei**
**Xi'an**
**Shaanxi 710075 (CN)**

(74) Representative: **Lang, Johannes**
**Bardehle Pagenberg Partnerschaft mbB**
**Patentanwälte, Rechtsanwälte**
**Prinzregentenplatz 7**
**81675 München (DE)**

(56) References cited:
EP-A1- 1 428 365    EP-B1- 1 332 554
EP-B1- 1 453 211    EP-B1- 1 453 211
CN-A- 101 232 485    US-A1- 2009 115 914

• **ARSLAN H ET AL: "Adaptive Joint Detection of Cochannel Signals for TDMA Handsets", IEEE TRANSACTIONS ON COMMUNICATIONS, IEEE SERVICE CENTER, PISCATAWAY, NJ. USA, vol. 52, no. 10, 1 October 2004 (2004-10-01), pages 1722-1732, XP011121334, ISSN: 0090-6778, DOI: 10.1109/TCOMM.2004.836443**

**Description**

Technical Field

The present disclosure generally relates to method and device for Frequency Offset estimation, in particular to method and device for Frequency Offset estimation based on interference.

Background

In wireless communication systems, Frequency Offset suffered by the User Equipment (UE) should be compensated accurately to avoid performance degradation. To compensate the Frequency Offset, the Frequency Offset should be estimated firstly. There are plenty of literatures addressing the Frequency Offset estimation based on wanted signal. However, when the wanted signal is heavily polluted by interferers, adjacent channel interferers, co-channel interferers, or both, the wanted signal based algorithms do not perform very well. In this case, it is straightforward to turn to interferer to estimate Frequency Offset.

Frequency Offsets (FO) can be due to Local Oscillator (LO) drifts at both the UE (e.g. mobile device) and the Base Station (BS), but also to the UE speed translating into Doppler shift in Line Of Sight (LOS) propagation conditions. In wireless communication systems, due to temperature changes of the receiver, for example, Frequency Offset between the transmitter and the receiver is an inevitable issue which needs to be tackled carefully otherwise the performance of the system may be degraded greatly. When the wanted signal is embedded deeply in interferences, how to estimate the Frequency Offset becomes extremely difficult.

When there is an interferer accompanying the wanted signal, there are two different Frequency Offsets. The first one is applied to the interferer. That is the Frequency Offset between the crystal of the interferer's base station and the crystal of the UE. The second one is applied to the wanted signal. It is the Frequency Offset between the crystal of the wanted signal's base station and the crystal of the UE. The crystal accuracy of base stations is strictly limited by mobile communication standards, such as 3GPP. So it is reasonable to neglect the frequency difference between the interferer's base station and the wanted signal's base station. The Doppler Effect is another factor which might cause Frequency Offset difference between the interferer and the wanted signal. Its influence on Frequency Offset only appears when there is line of sight. Otherwise, it only causes spectrum changes of signals. Since in most cases, there is no line of sight, the Doppler Effect can also be ignored. The last factor which may affect the Frequency Offset is the crystal frequency of the UE. Since the interferer and the wanted signal share the same crystal, the Frequency Offset of the interferer should be the same as the Frequency Offset of the wanted signal if above two factors are not taken into consideration.

In summary, firstly, if the wanted signal is much weaker than the interferer, the Frequency Offset can be estimated by taking the interferer into consideration. Secondly, with usage information of the interferer, a more accurate carrier to interference ratio (CIR) can be estimated and used as an indicator to find-tuned automatic frequency correction (AFC)/automatic timing correction (ATC) loop. However, in the related art, there has not been Frequency Offset estimation technology based on information of the interferer.

EP 1 332 554 B1 discloses that a joint demodulator is configured to generate an estimated first frequency or first frequency error for the first signal and an estimated second frequency or second frequency error for the second signal. A first long-term automatic frequency control is responsive to the estimated first frequency or first frequency error, wherein the joint demodulator is responsive to the first long-term automatic frequency control. A second long-term automatic frequency control is responsive to the estimated second frequency or second frequency error, wherein the joint demodulator is responsive to the second long-term automatic frequency control. First and second local automatic frequency controls also may be included in the joint demodulator, wherein the first long-term automatic frequency control is responsive to the first local automatic frequency control and the second-long-term automatic frequency control is responsive to the second local automatic frequency control. The first long-term automatic frequency control and the second long-term automatic frequency control can produce respective first and second frequency offset signals that are applied to the joint demodulator. Alternatively, a difference between the first and second frequency offsets is applied to the joint demodulator and the first frequency offset is applied to a downconverter that downconverts the jointly received first and second signals and provides the downconverted signals to the joint demodulator.

Further examples can be found in H. Arslan et al.: "Adaptive Joint Detection of Cochannel Signals for TDMA Handsets", IEEE Transactions on Communications, IEEE Service Center, Piscataway, NJ. USA, vol 52, no 10, pp. 1722-1732, ISSN: 0090-6778, in EP 1 453 211 B1, and in US 2009/115914 A1.

Therefore, it would be advantageous to have a method, system, device and computer program product that addresses one or more of the issues discussed above by using information of the interferer as an aid.

Brief Description of the Drawings

In the following description, aspects of this disclosure are described with reference to the following drawings, in which:

FIGURE 1 is an illustration of a block diagram of an exemplary user equipment in accordance with an aspect of this disclosure;

FIGURE 2 is an illustration of a block diagram of an exemplary Frequency Offset estimation system in accordance with an aspect of this disclosure;

FIGURE 3 is an illustration of a block diagram of the signal processing module shown in FIGURE 1 in accordance with an aspect of this disclosure;

FIGURE 4 is an illustration of a block diagram of an implementation of the Frequency Offset estimation system shown in FIGURE 2;

FIGURE 5 is a plot showing the performance comparison between the FOE system in accordance with this disclosure and the conventional FOE system;

FIGURE 6 is a plot showing the performance of CIR estimation with respect to different Frequency Offset in accordance with this disclosure;

FIGURE 7 is an illustration of a block diagram of another exemplary user equipment with AFC loop and ATC loop in accordance with this disclosure;

FIGURE 8 is an illustration of a block diagram of an exemplary interferer Frequency Offset estimator shown in Figure 2 in accordance with this disclosure;

FIGURE 9 is an illustration of a block diagram of the blind symbol estimator shown in Figure 8 in accordance with this disclosure;

FIGURE 10 is an illustration of a block diagram of another exemplary Frequency Offset estimation system in accordance with this disclosure;

FIGURE 11 is an illustration of a block diagram of still another exemplary Frequency Offset estimation system in accordance with this disclosure;

FIGURE 12 is an illustration of a flow chart of an exemplary Frequency Offset estimation method in accordance with this disclosure;

FIGURE 13 is an illustration of a flow chart of another exemplary Frequency Offset estimation method in accordance with this disclosure; and

FIGURE 14 is an illustration of a flow chart of still another exemplary Frequency Offset estimation method in accordance with this disclosure.

Description of Embodiments

The invention is defined by the independent claims. Preferred embodiments are described by the dependent claims.

Some terms are used for denoting specific system components throughout the application document. As would be appreciated by those s skilled in the art, different designations may usually be used for denoting the same component, thus the application document does not intend to distinguish those components that are only different in name rather than in function. In the application document, terms "comprise", "include" and "have" are used in the opening way, and thus they shall be construed as meaning "comprise but not limited to ...". Besides, the term "coupled", as may be used herein, includes direct coupling and indirect coupling via another component. Inferred coupling, for example where one element is coupled to another element by inference, includes direct and indirect coupling between two elements in the same manner as "coupled".

The following detailed description refers to the accompanying drawings that show, by way of illustration, specific details and aspects of this disclosure. The word "exemplary" is used herein to mean "serving as an example, instance, or illustration". Any aspect of this disclosure or design described herein as "exemplary" is not necessarily to be construed as preferred or advantageous over other aspects of this disclosure or designs.

Some FIGURES may use similar reference numbers. This is merely to indicate that the same number in different FIGURES may be similar types of items. However, the same number in different FIGURES may be each its own iteration or aspect of this disclosure.

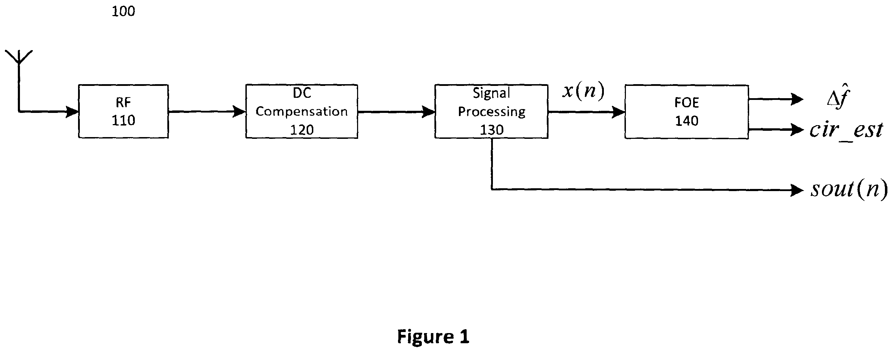

In Figure 1, there is provided a block diagram of an exemplary user equipment 100 in accordance with an aspect of this disclosure. The user equipment 100 is shown may be a mobile device, such as a mobile phone, a tablet computer, a laptop computer, etc. User Equipment 100 may comprise a RF module 110, a DC compensation module 120, a signal processing module 130, and a Frequency Offset estimation (FOE) system 140 (referred to as FOE system 140 hereinafter). A signal including both wanted signal and interferer is received by the RF module 110. In the RF module 110, the received signal is filtered, amplified and then digitalized. The output signal from the RF module 110 is fed into the DC compensation module 120, which estimates and removes DC from the digitalized signal. The output signal from the DC compensation module 120 is fed into the signal processing module 130 where some signal processing, such as but not limit to, timing synchronization, channel estimation and interference cancellation, is done. Usually, the signal processing module 130 output signal/signals to the FOE system 140 where frequency offset estimation is done on one hand and soft estimation of the transmitted symbols is done and provided to other modules for further analysis on the other hand. The FOE system 140 is used to estimate the frequency offset suffered by the signal received by RF module 110. The FOE system 140 and the signal processing module 130 will be explained in detail in the following.

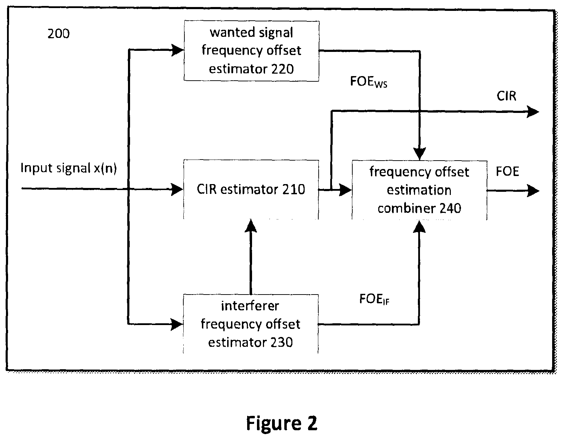

Figure 2 shows an exemplary Frequency Offset estimation system (FOE) 200 in accordance with an aspect of this disclosure. In Figure 2, the Frequency Offset estimation (FOE) system 200 (referred to as FOE system 200 hereinafter) is one example of the FOE system 140 shown in Figure 1. The FOE system 200 comprises a carrier to interference ratio (CIR) estimator 210 (referred to as CIR estimator 210 hereinafter), a wanted signal Frequency Offset estimator 220 (referred to as wanted signal FOE 220 hereinafter), an interferer Frequency Offset estimator 230 (referred to as interferer FOE 230 hereinafter) and a Frequency Offset estimation combiner 240 (referred to as FOE combiner 240 hereinafter). In the FOE system 200, an input signal x(n) is provided to the CIR estimator 210, the wanted signal FOE 220 and the interferer FOE 230. The input signal x(n) is output from a signal processing module (e.g. the signal processing module 230 shown in Figure 1) upstream to the FOE system 200. The CIR estimator 210 estimates and outputs the CIR signal of the input signal x(n), indicated by "CIR" in this Figure, based on the input signal x(n), and the information about interferer obtained from the interferer FOE 230, as will be explained in the following. The CIR signal generated by the CIR estimator 210 is provided to the FOE combiner 240. The CIR signal could also be provided to other devices external to the FOE system 200 for further purposes, as will be explained in the following. The wanted signal FOE 220 generates a wanted signal FOE signal, indicated by $FOE_{ws}$, based on the input signal x(n), and the interferer FOE 230 generates an interferer FOE signal, indicated by $FOE_{if}$, based on the input signal x(n). The $FOE_{ws}$ and $FOE_{if}$ are provided to the FOE combiner 240. The FOE combiner 240 combines the $FOE_{ws}$ and $FOE_{if}$, and outputs the combined estimation representing the FOE of the input signal x(n), indicated by FOE in the Figure. The combination of the $FOE_{ws}$ and $FOE_{if}$ could be done based on the CIR signal provided by the CIR estimator 210. In an example, the FOE combiner 240 may calculate weighting factors of the $FOE_{ws}$ and $FOE_{if}$ based on the CIR signal, and combine the $FOE_{ws}$ and $FOE_{if}$ into the FOE based on the weighting factors. The weighting factors can be calculated based on the following formulas:

$$z = 10^{CIR/10} \qquad (1)$$

$$W_{ws} = \sqrt{z/(1+z)} \qquad (2)$$

$$W_{if} = \sqrt{1/(1+z)} \qquad (3)$$

wherein, CIR is the output value of the CIR estimator 210, z represents an intermediate parameter, $W_{ws}$ represents the weighting factor of the $FOE_{ws}$, and $W_{if}$ represents the weighting factor of the $FOE_{if}$. With the two weighting factors, the $FOE_{ws}$ and $FOE_{if}$ can be combined into FOE by weighted summing based on the following formula:

$$FOE = W_{ws} \bullet FOEws + W_{if} \bullet FOE_{if} \qquad (4)$$

Therefore, the FOE system 200 estimates the Frequency Offset of the input signal x(n) based on the information of the interferer, the wanted signal and the CIR value. When the wanted signal is heavily polluted by the interferer, the performance of the Frequency Offset estimation can be improved greatly by the FOE system 200, as compared to the conventional FOE system.

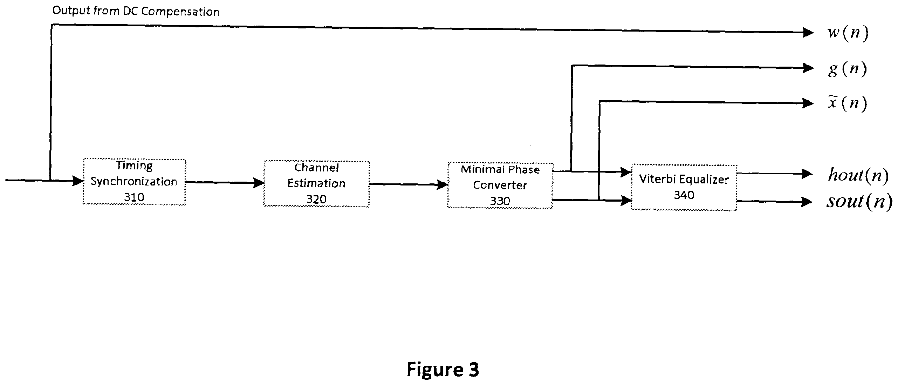

Figure 3 is a block diagram showing the signal processing module 130 shown in FIGURE 1 in accordance with an aspect of this disclosure. The signal processing module comprises a timing synchronization module 310, a channel estimator 320, a minimal phase converter 330 and a Viterbi equalizer 340. The signal processing module receives the output from a DC compensation module (e.g. the DC compensation module 120 shown in Figure 1) denoted by w(n) (DC compensated signal) and outputs five signals denoted by w(n) (which is same as the input *w(n)*), *g(n)*, *x̂(n)*, *hout(n)* and *sout(n)* respectively. Specifically, the timing synchronization module 310 finds out the position of Training Sequence Code (TSC) in *w(n)*. Knowing the position of TSC, the channel estimator 320 can estimate the channel impulse response undergone by *w(n)*. In the minimal phase converter 330, the estimated channel impulse response is converted to minimal phase so that the energy of the channel is aggregated into the first several tabs. The minimal phase channel impulse response is denoted by g(n) in figure 3. It is required to filter *w(n)* in order to get the minimal phase channel impulse response. The filtered signal generated by the minimal phase converter 330 is denoted by $\hat{x}(n)$ in figure 3. Using signal g(n) and $\hat{x}(n)$, the Viterbi equalizer module 340 outputs the hard estimation and the soft estimation of the transmitted signal, denoted by *hout(n)* and *sout(n)* respectively.

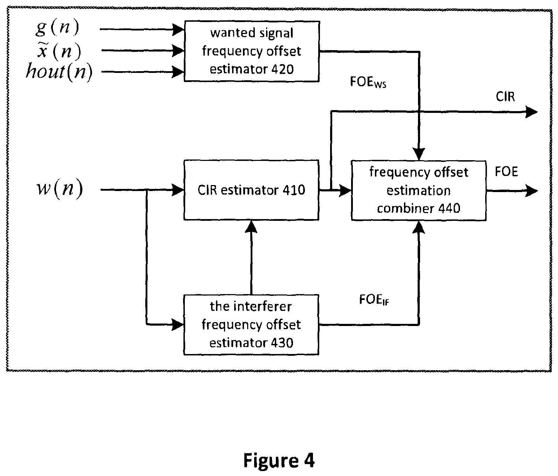

Figure 4 shows an implementation of the Frequency Offset Estimation (FOE) system shown in Figure 2. In Figure 4, FOE system 400 comprises a CIR estimator 410, a wanted signal FOE 420, an interferer FOE 430 and a FOE combiner 440, which are examples of the CIR estimator 210, the wanted signal FOE 220, the interferer FOE 230 and the FOE combiner 240 shown in Figure 2 respectively. The signal input to the FOE system 400 comprises *w(n), g(n), $\hat{x}(n)$,* and *hout(n)* which correspond to the output signals from the signal processing module shown in Figure 3. In particular, *w(n)* is input to the interferer FOE 430 and the CIR estimator 410, and *g(n), $\hat{x}(n)$,* and *lout(n)* are inputs to the wanted signal FOE 420. The interferer FOE 430 generates $FOE_{if}$ based on *w(n)*, the CIR estimator 410 generates CIR signal based on *w(n),* and the wanted signal FOE 420 generates $FOE_{ws}$ based on *g(n), $\hat{x}(n)$,* and *hout(n)*. The FOE combiner 440 generates combined estimation signal FOE, which is an example described with respect to Figure 2.

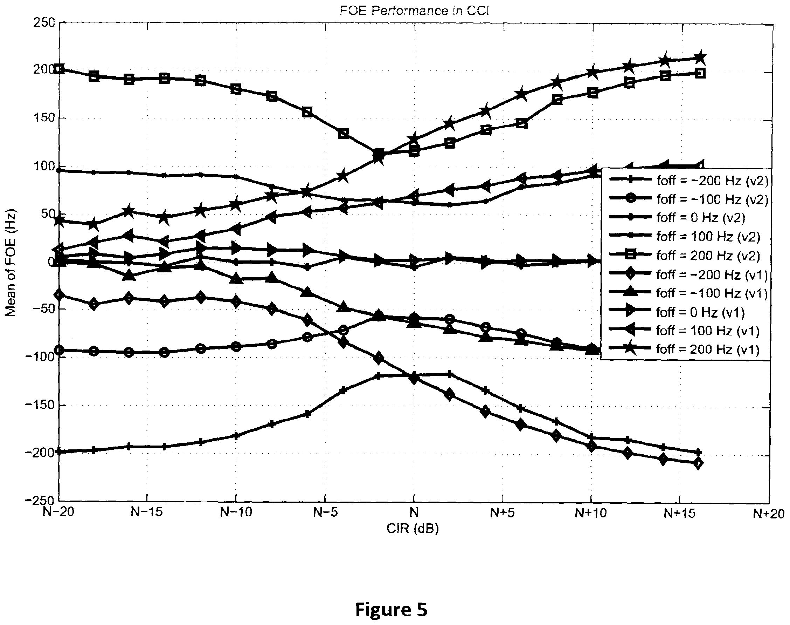

Figure 5 shows the performance comparison between the FOE system in accordance with this disclosure and the conventional FOE system. There are ten curves in Figure 5. Five curves whose legend is appended with v2 represent FOE performance in this disclosure. The remaining five curves whose legend is appended with v1 show the performance of conventional FOE. Each curve of the ten shows the actual estimated FOE against different CIR when a fixed Frequency Offset is applied to both the wanted signal and the interferer. For example, the curve labeled with "foff = -200 Hz (v2)" illustrates the estimated Frequency Offset at different CIR when -200 Hz Frequency Offset is applied. It shows that the estimated Frequency Offset is pretty close to -200 Hz when CIR is N-20. Under the same condition (the same CIR, the same applied Frequency Offset), the conventional FOE can only get an estimation of around -50 Hz. For other CIRs or other applied Frequency Offsets, it is also obvious that the FOE of this disclosure is much closer to the actual applied Frequency Offset than the conventional FOE when the interferer is stronger than the wanted signal (CIR is negative). So it can be concluded that the FOE in this disclosure outperforms the conventional FOE when the interferer is stronger than the wanted signal.

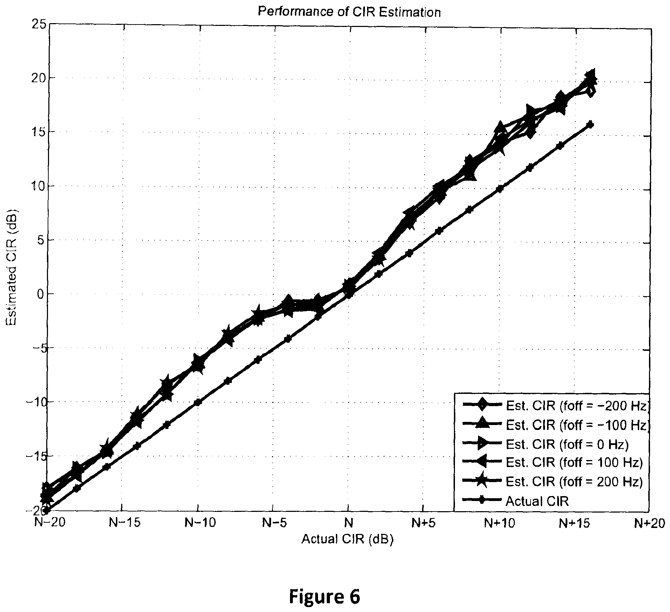

Figure 6 shows the performance of CIR estimation with respect to different Frequency Offset. As can be seen from Figure 6, the accuracy of CIR estimation is not sensitive to the Frequency Offset, which means that the estimated CIR can be used without considering the Frequency Offset. Also, it is can be seen from Figure 6 that the estimated CIR is close to the actual applied CIR.

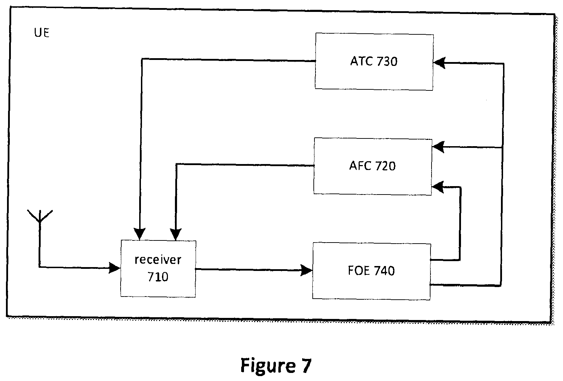

In Figure 2, the FOE system 200 outputs the CIR signal and the FOE signal. The output CIR and FOE could be used to fine-tune the factors in control loops, such as AFC loop and ATC loop. Figure 7 shows a block diagram of another exemplary user equipment with AFC loop and ATC loop in accordance with this disclosure. A receiver 710 receives signals via antenna, for example. The signal received is input to a FOE system 740, which is one example of the FOE the FOE system 200 shown in Figure 2. There could be a signal processing module (not shown in Figure 7) between the receiver 710 and the FOE system 740. The CIR signal output from the FOE system 740 is provided to an AFC device 720 for performing automatic frequency correction and an ATC device 730 for performing automatic timing correction (referred to as AFC 720 and ATC 730 hereinafter), and the FOE signal output from the FOE system 740 is provided to the AFC 720. There may be a TOE signal (not shown) provided to the ATC 730. In the AFC 720 and ATC 730, some Infinite Impulse Response (IIR) filtering is performed by using the CIR estimated by the FOE system 740, and the transfer function of the filtering can be fine-tuned based on the CIR. When a weak interferer is indicated by the CIR, the forgetting factors of the IIR filters can be increased to speed up the tracking of Frequency Offset/timing offset. Otherwise, the forgetting factors can be decreased to suppress the noise in FOE/TOE as much as possible. The receiving frequency and timing of the receiver 710 can be tuned based on the outputs from the AFC 720 and ATC 730.

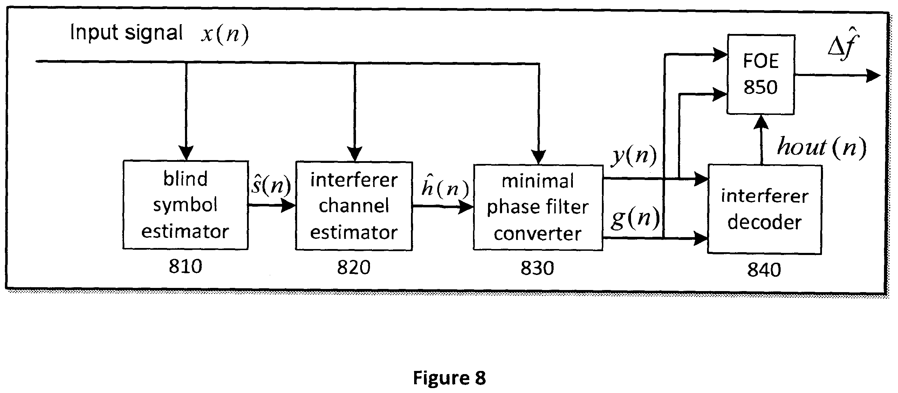

Figure 8 shows a block diagram of an exemplary interferer Frequency Offset estimator 230 shown in Figure 2 in accordance with an aspect of this disclosure. In Figure 8, the interferer Frequency Offset estimator 230 comprises a blind symbol estimator 810, an interferer channel estimator 820, a minimal phase filter converter 830, an interferer decoder 840 and a Frequency Offset estimation module 850. An input signal x(n) is provided to the blind symbol estimator 810, the interferer channel estimator 820, and the minimal phase filter converter 830 in parallel. In the blind symbol estimator 810, part of symbols of the interferer is estimated based on the input signal x(n) without knowing any a priori knowledge. The blind symbol estimator 810 outputs a signal $\hat{s}(n)$ representing the estimated interferer symbols from the input signal x(n) to the interferer channel estimator 820. In the interferer channel estimator 820, interferer channel estimation is performed based on the signal $\hat{s}(n)$. The interferer channel estimator 820 outputs a signal $\hat{h}(n)$ representing the interferer channel estimation to the minimal phase filter converter 830. In the minimal phase filter converter 830, minimal phase conversion is performed to the signal $\hat{h}(n)$. The minimal phase filter converter 830 outputs a signal y(n) and a signal g(n) to the interferer decoder 840 and the Frequency Offset estimation module 850, wherein y(n) is the filtered sample of x(n) and g(n) is the minimal phase channel impulse response. The minimal phase channel estimation which is output from the minimal phase filter converter 830 is then used in the interferer decoder 840 to decode the symbols of interferer. The symbols decoded in the interferer decoder 840 are those which are not estimated in the blind symbol estimator 810. The interferer decoder outputs a signal *hout(n)* representing the decoded symbols to the Frequency Offset estimation module 850. In the Frequency Offset estimation module 850, Frequency Offset estimation is performed based on the signals y(n), g(n) and *hout(n)*. The Frequency Offset estimation module 850 outputs a signal $\Delta\hat{f}$ representing the Frequency Offset estimation of the input signal x(n).

Algorithms used in the interferer channel estimator 820, the minimal phase filter converter 830 and the Frequency Offset estimation module 850 are well known in the art, and would not be discussed in detail herein. The algorithms of the blind symbol estimator 810 and the interferer decoder 840 will be described in detail in the following.

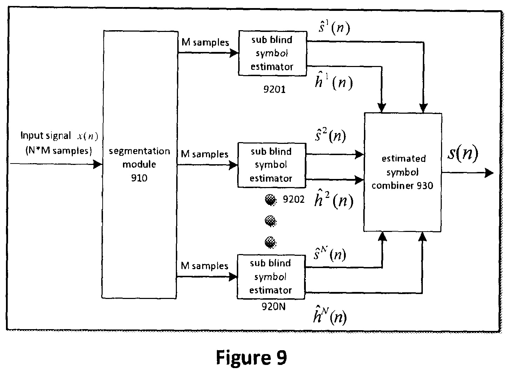

Figure 9 shows a block diagram of the blind symbol estimator 810 shown in Figure 8. As shown in Figure 9, the blind symbol estimator 810 shown in Figure 8 consists of multiple sub estimation modules which are indicated by sub blind symbol estimator 9201 to 920N, respectively. The functionality of the sub estimation modules is to estimate the transmitted symbols without any a priori knowledge. Besides, an accompanying channel impulse response is also estimated to further aid the combining of estimated symbols from different sub modules. The input signal x(n) which has N*M samples is equally divided by a segmentation module 910 into N groups with each group having M samples. Each group is then fed into one of the sub blind symbol estimators 9201 to 920N.

In each sub blind symbol estimator, all possible transmitted symbol sequences are used to do channel estimation. The sequence with the largest channel power is then selected as the estimated transmitted symbols and the channel estimation with the largest power is selected as the accompanying channel estimation. The process can be explained in the following formulas.

$$\hat{s} = \arg\max_{s \in \alpha^M} \left( \sum_{i=0}^{L-1} \left\| x_i \cdot s \right\|^2 \right) \tag{5}$$

$$\hat{h}(i) = x_i \cdot \hat{s}, \quad i = 0, 1, \dots L-1 \tag{6}$$

$$x_i = \{x(n-i), x(n+1-i, \cdots, x(n+M-1-i))\} \quad and \quad s = \{\alpha_0, \alpha_1, \cdots, \alpha_{M-1}\} \tag{7}$$

Where $\alpha$ is alphabet of the transmitted symbols, and L is length of channel estimation.

Therefore, each sub blind symbol estimator output two signals, i.e. $\hat{s}^1(n)$ to $\hat{s}^n(n)$ and $\hat{h}^1(n)$ to $\hat{h}^n(n)$. Each $\hat{s}(n)$ represents the estimated transmitted symbol and each $\hat{h}(n)$ represents the estimated channel impulse response. Signals $\hat{s}^1(n)$ to $\hat{s}^n(n)$ and $\hat{h}^1(n)$ to $\hat{h}^n(n)$ are input to an estimated symbol combiner 930. In the estimated symbol combiner 930, the estimated symbols from different sub blind symbol estimators are combined. The process can be explained in the following formulas.

$$z^1(n) = \hat{s}^1(n) \tag{8}$$

$$z^k(n) = \begin{cases} s^k(n) & if \quad RE\{h^k(n) \cdot [h^1(n)]\} > 0 \\ -s^k(n) & if \quad RE\{h^k(n) \cdot [h^1(n)]\} \le 0 \end{cases} \quad k = 2, 3, \dots N \tag{9}$$

$$s(n) = [z^1(n), z^2(n), \dots, z^N(n)] \tag{10}$$

where $\hat{s}^k(n)$ is the kth estimated symbol sequence and $\hat{h}^k(n)$ is the kth estimated channel impulse response, and $z^1(n)$, $z^2(n),\dots, z^N(n)$ are temporary sequences which come from the estimated transmitted symbol sequence. The length of $\hat{s}^k(n)$ is $L_s^k$, which could be different for different sub blind symbol estimators. The length of $\hat{h}^k(n)$ is $L_h$, which should be same for all sub blind symbol estimators. Operator " • " denotes dot production. The estimated symbol combiner 930 outputs a signal s(n) representing the estimated interferer symbols from the input signal x(n).

The principle of the interferer decoder 840 shown in Figure 8 is similar to series interference cancellation (SIC).

The principle of SIC is to cancel the effect of multipath with knowing the previous transmitted symbols whose delayed copies are superposed with current symbol and then hard decode the current symbol.

Suppose that the order of the channel impulse response after the minimal phase filter converter 830 shown in Figure 8 is 2, the following formula can be derived:

$$h = \{1, h(1), h(2)\} \qquad (11)$$

The received signal after the minimal phase filter converter 830 can be expressed as:

$$r'(n) = h * s(n) = s(n) + h(1)s(n-1) + h(2)s(n-2) \qquad (12)$$

In equation (11), h is the sequence of channel impulse response undergone by the interferer, h(1) and h(2) are the second tap and the third tap respectively. In equation (12), r'(n) is the signal after minimal phase filter, s(n-1) is the previous transmitted symbol and s(n-2) is the symbol prior to the previous symbol, where $*$ is the linear convolution operator and s(n) is the transmitted signal. With knowing the left two symbols, the effects of them can be cancelled based on the above formula and therefore the current symbol of the interferer can be easily obtained.

As described with respect to Figure 2, the CIR estimator 210 can generate the CIR signal by using the interferer information obtained from the interferer Frequency Offset estimator 230. The interferer information contains the minimal phase channel estimation, decoded estimated symbols of the interferer, and filtered signal from the minimal phase filter converter 830. From the minimal phase channel estimation and decoded symbols of the interferer, the transmitted interferer can be reconstructed, and then the power of the interferer can also be obtained. By subtracting the power of the interferer from the power of the filtered signal, the power of the wanted signal can be obtained. With the power of both the interferer and the wanted signal, it is straightforward to get the value of CIR by the CIR estimator 210.

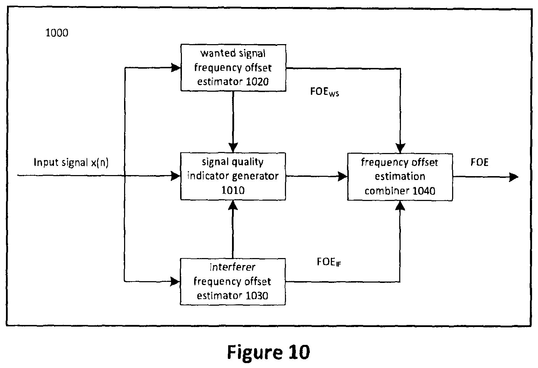

Figure 10 shows a block diagram of another exemplary Frequency Offset estimation system 1000 as an alternative to the example of Figure 2 in accordance with another aspect of this disclosure. The Frequency Offset estimation system 1000 comprises a signal quality indicator generator 1010 instead of the CIR estimator shown in Figure 2. The Frequency Offset estimation system 1000 further comprises a wanted signal Frequency Offset estimator 1020, an interferer Frequency Offset estimator 1030 and a Frequency Offset estimation combiner 1040, which are the examples of the wanted signal Frequency Offset estimator 220, the interferer Frequency Offset estimator 2130 and the Frequency Offset estimation combiner 240 shown in Figure 2, respectively. The signal quality indicator generator 1010 generates a signal quality indicator based on information obtained from the wanted signal Frequency Offset estimator 1020 and the interferer Frequency Offset estimator 1030. Based on a signal quality indicator instead of the CIR shown in Figure 2, the Frequency Offset estimation combiner 1040 combines a wanted signal FOE signal, indicated by $FOE_{ws}$, output from the wanted signal Frequency Offset estimator 1020, and an interferer FOE signal, indicated by $FOE_{if}$, output from the interferer Frequency Offset estimator 1030. For example, the signal quality indicator can be Noise-to-Signal Ratio (NSR), Bit Error Rate (BER), or Frame Error Rate (FER), and so on. The signal quality indicator can be used to dynamically switch between the $FOE_{ws}$ and the $FOE_{if}$. For example, if the signal quality is above a pre-defined threshold, which means the wanted signal is much stronger than the interferer, then the $FOE_{ws}$ is used, otherwise, the $FOE_{if}$ is used. The Frequency Offset estimation combiner 1040 combines the signals $FOE_{ws}$ and the $FOE_{if}$ which are generated by the wanted signal Frequency Offset estimator 1020 and the interferer Frequency Offset estimator 1030 respectively into signal FOE, which is one example of the combination described in Figure 2. The preferred features and additional advantages described wit respect to Figure 2 may be incorporated into the example described with respect to Figure 10.

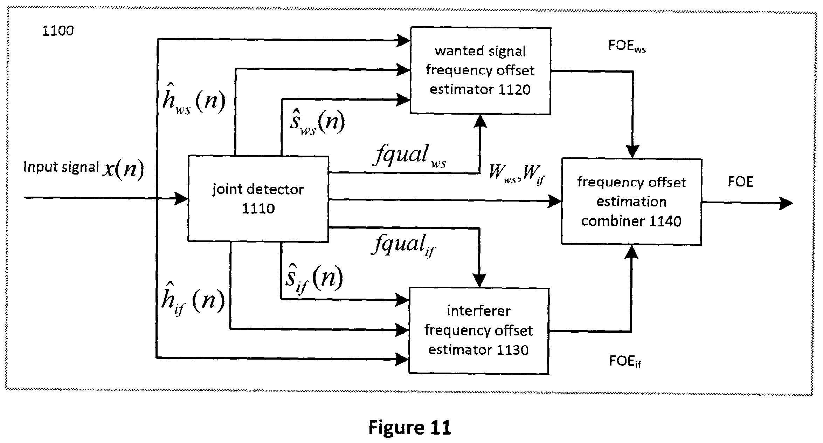

Figure 11 shows a block diagram of still another exemplary Frequency Offset estimation system 1100 as an alternative to the example of Figure 2 in accordance with another aspect of this disclosure. Instead of using blind symbol estimation, joint detection is used to decode the symbols of the interferer. Meanwhile, two quality indicators of the estimated Frequency Offset are also used to phase out the estimated Frequency Offset with bad quality. The Frequency Offset estimation system 1100 comprises a joint detector 1110 instead of the CIR estimator shown in Figure 2. The Frequency Offset estimation system 1100 further comprises a wanted signal Frequency Offset estimator 1120, an interferer Frequency Offset estimator 1130 and a Frequency Offset estimation combiner 1140, which are the examples of the wanted signal Frequency Offset estimator 220, the interferer Frequency Offset estimator 230 and the Frequency Offset estimation combiner 240 shown in Figure 2, respectively, with the exception that the interferer Frequency Offset estimator 1130 only estimate the interferer FOE signal $FOE_{if}$ without outputting information about the interferer. The joint detector 1110 generates signals $\hat{h}_{ws}(n)$, $\hat{s}_{ws}(n)$ and $fqual_{ws}$, and signals $\hat{h}_{if}(n)$, $\hat{s}_{if}(n)$ and $fqual_{if}$ based on an input signal x(n), wherein $\hat{s}_{ws}(n)/\hat{s}_{if}(n)$ is the estimated symbol sequence of the wanted signal/interferer, $\hat{h}_{ws}(n)/\hat{h}_{if}(n)$ is the channel impulse response undergone by the wanted signal/interferer, and $fqual_{ws}/fqual_{if}$ is the quality of $\hat{s}_{ws}(n)/\hat{s}_{if}(n)$.

The signals $\hat{h}_{ws}(n)$, $\hat{s}_{ws}(n)$ and $fqual_{ws}$ are provided to the wanted signal Frequency Offset estimator 1120, and the signals $\hat{h}_{if}(n)$, $\hat{s}_{if}(n)$ and $fqual_{if}$ are provided to the interferer Frequency Offset estimator 1130. The wanted signal Frequency Offset estimator 1120 and the interferer Frequency Offset estimator 1130 generate signals $FOE_{ws}$ and $FOE_{if}$ based on the signals provided, respectively. The signals $FOE_{ws}$ and $FOE_{if}$ in Figure 11 are the examples of the signals $FOE_{ws}$ and $FOE_{if}$ shown in Figure 2. The Frequency Offset estimation combiner 1140 combines the signals $FOE_{ws}$ and $FOE_{if}$ into a signal FOE representing the Frequency Offset estimation of the input signal x(n). The combination is one example of Figure 2. In an exemplary example, the joint detector 1110 also generates a weighting factor $W_{ws}$ corresponding to $FOE_{ws}$ and a weighting factor $W_{if}$ corresponding to $FOE_{if}$. The two weighting factors and the signals $FOE_{ws}$ and $FOE_{if}$ are provided to the Frequency Offset estimation combiner 1140. Based on the weighting factors $W_{ws}$ and $W_{if}$, the Frequency Offset estimation combiner 1140 combines the signals $FOE_{ws}$ and $FOE_{if}$ into the signal FOE, as described with respect to Figure 2. The preferred features and additional advantages described wit respect to Figure 2 can be incorporated into the example described with respect to Figure 11.

While the CIR estimator, the signal quality indicator generator or the joint detector is shown to be used in the FOE system, as described above, other signal evaluation modules which can evaluate the wanted signal and the interferer in an input signal could also be used in the FOE system.

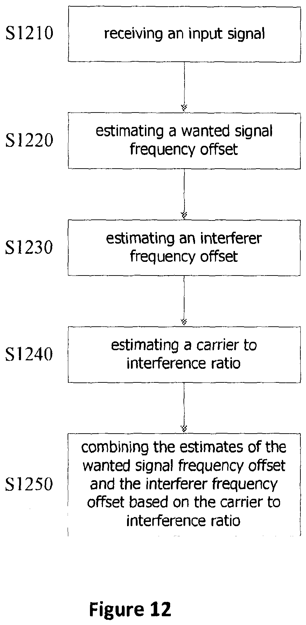

Exemplary Frequency Offset estimation methods are described in the following with respect to Figure 12 to Figure 14.

Figure 12 shows a flow chart of an exemplary Frequency Offset estimation method in accordance with one aspect of this disclosure. In step 1210, an input signal is received. In step 1220, wanted signal Frequency Offset is estimated to a wanted signal in the input signal. In step 1230, interferer Frequency Offset is estimated to an interferer in the input signal. In the step 1240, a carrier to interference ratio of the input signal is estimated. In the step 1250, the estimates of the wanted signal Frequency Offset and the interferer Frequency Offset is combined into combined Frequency Offset estimation based on the carrier to interference ratio. The combined Frequency Offset estimation would be used as Frequency Offset estimation of the input signal.

In accordance with an aspect of this disclosure, the step 1230 further comprises sub steps of estimating symbols of the interferer based on the input signal without knowing any a priori knowledge, estimating an interferer channel of the interferer based on the estimated symbols of the interferer, converting minimal phase to the estimate of interferer channel to generate an estimate of a minimal phase channel and a filtered signal, decoding the estimated symbols of the interferer; and estimating Frequency Offset to the interferer based on the decoded estimated symbols of the interferer, the estimate of the minimal phase channel and the filtered signal, in accordance with an aspect of this disclosure, estimating the carrier to interference ratio of the input signal is based on the decoded estimated symbols of the interferer, the estimate of the minimal phase channel and the filtered signal, in accordance with an aspect of this disclosure, estimating symbols of the interferer comprises estimating a plurality of segments of the input signal and generating symbols of the interferer of the segments and combining the symbols of the interferer of the segments into the estimated symbols of the interferer.

in accordance with an aspect of this disclosure, the step 1250 further comprises a sub step of generating a first weighting factor corresponding to the estimate of the wanted signal Frequency Offset and a second weighting factor corresponding to the estimates of the interferer Frequency Offset based on the carrier to interference ratio. The combined Frequency Offset estimation is generated by weighted summing the estimates of the wanted signal Frequency Offset and the interferer Frequency Offset based on the first weighting factor and the second weighting factor.

in accordance with an aspect of this disclosure, the input signal comprises a DC compensated signal, minimal phase channel impulse response signal, a filtered signal and a hard estimation signal. Performing step 1220 is based on the minimal phase channel impulse response signal, the filtered signal and the hard estimation signal. Performing step 1230 is based on the DC compensated signal. Performing step 1240 is based on the DC compensated signal.

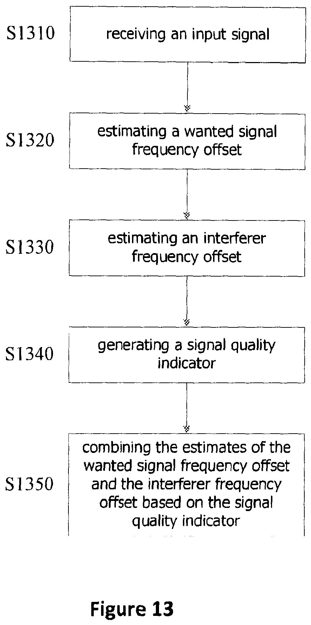

Figure 13 shows a flow chart of anther exemplary Frequency Offset estimation method in accordance with another aspect of this disclosure. Steps 1310, 1320 and 1330 are the examples of the steps 1210, 1220 and 1230 in Figure 12. In step 1340, a signal quality indicator of the input signal is generated. In step 1350, the estimates of the wanted signal Frequency Offset and the interferer Frequency Offset are combined into combined Frequency Offset estimation based on the signal quality indicator. The combined Frequency Offset estimation would be used as Frequency Offset estimation of the input signal.

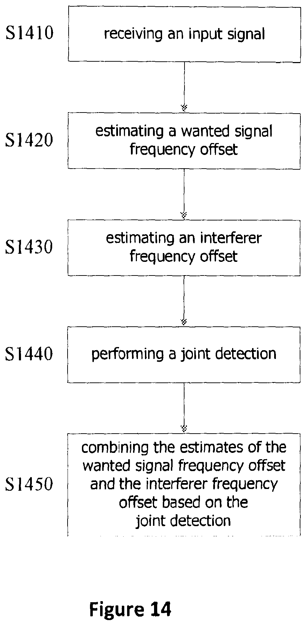

Figure 14 shows a flow chart of still anther exemplary Frequency Offset estimation method in accordance with another aspect of this disclosure. Steps 1410, 1420 and 1430 are the examples of the steps 1210, 1220 and 1230 in Figure 12. In step 1440, a joint detection is performed to the input signal. In step 1450, the estimates of the wanted signal Frequency Offset and the interferer Frequency Offset are combined into combined Frequency Offset estimation based on based on the joint detection. The combined Frequency Offset estimation would be used as Frequency Offset estimation of the input signal.

All of the advantages described in relation to the system examples of the disclosure apply equal to the method examples of the disclosure and the method may be implemented in any of the examples described above.

The flowcharts and block diagrams in the different depicted aspects illustrate the architecture, functionality, and operation of some possible implementations of apparatus, methods, system, and computer program products. In this regard, each block in the flowchart or block diagrams may represent a module, segment, or portion of computer usable or readable program code, which comprises one or more executable instructions for implementing the specified function or functions. In some alternative implementations, the function or functions noted in the block may occur out of the order noted in the figures. For example, in some cases, two blocks shown in succession may be executed substantially concurrently, or the blocks may sometimes be executed in the reverse order, depending upon the functionality involved.

The above embodiments can be implemented by hardware, software or firmware or a combination thereof. For example the various methods, processes and functional modules described herein may be implemented by a processor (the term processor is to be interpreted broadly to include a CPU, processing unit, ASIC, logic unit, or programmable gate array etc.). The processes, methods and functional modules may all be performed by a single processor or split between several processors; reference in this disclosure or the claims to a 'processor' should thus be interpreted to mean 'one or more processors'. The processes, methods and functional modules be implemented as machine readable instructions executable by one or more processors, hardware logic circuitry of the one or more processors or a combination thereof. Further the teachings herein may be implemented in the form of a software product. The computer software product is stored in a storage medium and comprises a plurality of instructions for making a computer device (which can be a personal computer, a server or a network device such as a router, switch, access point etc.) implement the method recited in the embodiments of the present disclosure.

**Claims**

1. A Frequency Offset estimation system (1000), comprising:

   a first Frequency Offset estimator (1020) to estimate wanted signal Frequency Offset of a wanted signal in an input signal;
   a second Frequency Offset estimator (1030) to estimate interferer Frequency Offset of an interferer in the input signal;
   a signal quality indicator (1010) to generate a signal quality indicator of the input signal; and
   a Frequency Offset estimation combiner (1040) to generate a combined Frequency Offset estimation of the input signal by combining estimates of the wanted signal Frequency Offset and the interferer Frequency Offset based on the signal quality indicator.

2. The Frequency Offset estimation system in accordance with Claim 1, further comprising:

   a joint detector to perform a joint detection to the input signal;
   wherein the Frequency Offset estimation combiner combines the estimates of the wanted signal Frequency Offset and the interferer Frequency Offset based on the joint detection.

3. The Frequency Offset estimation system in accordance with Claim 1, wherein the input signal comprises a DC compensated signal, a minimal phase channel impulse response signal, a filtered signal and a hard estimation signal, and
   wherein the first Frequency Offset estimator estimates the wanted signal Frequency Offset based on the minimal phase channel impulse response signal, the filtered signal and the hard estimation signal, the second Frequency Offset estimator estimates signal Frequency Offset based on the DC compensated signal, and the carrier to interference ratio estimator estimates the carrier to interference ratio based on the DC compensated signal.

4. A method for Frequency Offset estimation, comprising:

   receiving (S1310) an input signal;
   estimating (S1320) wanted signal Frequency Offset to a wanted signal in the input signal;
   estimating (S1330) interferer Frequency Offset to an interferer in the input signal;
   generating (S1340) a signal quality indicator of the input signal; and
   combining (S1350) the estimates of the wanted signal Frequency Offset and the interferer Frequency Offset to generate a combined Frequency Offset estimation for the input signal based on the signal quality indicator.

5. The method in accordance with Claim 4, further comprising:

performing a joint detection to the input signal,
wherein combining the estimates of the wanted signal Frequency Offset and the interferer Frequency Offset is based on the joint detection.

6. The method in accordance with Claim 4, wherein the input signal comprises a DC compensated signal, a minimal phase channel impulse response signal, a filtered signal and a hard estimation signal, and
wherein estimating the wanted signal Frequency Offset is based on the minimal phase channel impulse response signal, the filtered signal and the hard estimation signal, estimating interferer Frequency Offset is based on the DC compensated signal, and estimating the carrier to interference ratio is based on the DC compensated signal.

7. An user equipment (100), comprising:

a receiver (110) to receive an signal;
a Frequency Offset estimation system (140) as defined in any one of the previous Claims 1-3.

8. The user equipment in accordance with Claim 7, further comprising: an automatic frequency correction device to performing automatic frequency correction; and
an automatic timing correction device to performing automatic timing correction.

9. The user equipment in accordance with Claim 7, further comprising:

a DC compensation module (120) to perform DC compensation to the signal to provide a DC compensated signal,
a signal processing module (130) to process the DC compensated signal to provide an input signal to the Frequency Offset estimation system.

**Patentansprüche**

1. Frequenzversatz-Schätzsystem (1000), umfassend:

einen ersten Frequenzversatz-Schätzer (1020) zum Schätzen eines Nutzsignal-Frequenzversatzes eines Nutzsignals in einem Eingangssignal;
einen zweiten Frequenzversatz-Schätzer (1030) zum Schätzen eines Störer-Frequenzversatzes eines Störers in dem Eingangssignal;
einen Signalqualitätsindikator (1010) zum Erzeugen eines Signalqualitätsindikators des Eingangssignals; und
einen Frequenzversatz-Schätzkombinierer (1040) zum Erzeugen einer kombinierten Frequenzversatz-Schätzung des Eingangssignals durch Kombinieren von Schätzungen des Nutzsignal-Frequenzversatzes und des Störer-Frequenzversatzes basierend auf dem Signalqualitätsindikator.

2. Frequenzversatz-Schätzsystem nach Anspruch 1, ferner umfassend:

einen gemeinsamen Detektor zum Durchführen einer gemeinsamen Detektion mit dem Eingangssignal;
wobei der Frequenzversatz-Schätzkombinierer die Schätzungen des Nutzsignal-Frequenzversatzes und des Störer-Frequenzversatzes basierend auf der gemeinsamen Detektion kombiniert.

3. Frequenzversatz-Schätzsystem nach Anspruch 1, wobei das Eingangssignal ein gleichstromkompensiertes Signal, ein Minimalphasenkanal-Impulsantwortsignal, ein gefiltertes Signal und ein hartes Schätzsignal umfasst, und wobei der erste Frequenzversatz-Schätzer den Nutzsignal-Frequenzversatz basierend auf dem Minimalphasenkanal-Impulsantwortsignal, dem gefilterten Signal und dem harten Schätzsignal schätzt, der zweite Frequenzversatz-Schätzer einen Signal-Frequenzversatz basierend auf dem gleichstromkompensierten Signal schätzt, und der Träger-zu-Interferenz-Verhältnis-Schätzer das Träger-zu-Interferenz-Verhältnis basierend auf dem gleichstromkompensierten Signal schätzt.

4. Verfahren zur Frequenzversatz-Schätzung, umfassend:

Empfangen (S1310) eines Eingangssignals;
Schätzen (S1320) eines Nutzsignal-Frequenzversatzes zu einem Nutzsignal im Eingangssignal;
Schätzen (S1330) eines Störer-Frequenzversatzes zu einem Störer im Eingangssignal;

Erzeugen (S1340) eines Signalqualitätsindikators des Eingangssignals; und

Kombinieren (S1350) der Schätzungen des Nutzsignal-Frequenzversatzes und des Störer-Frequenzversatzes zum Erzeugen einer kombinierten Frequenzversatz-Schätzung für das Eingangssignal basierend auf dem Signalqualitätsindikator.

5. Verfahren nach Anspruch 4, ferner umfassend:

Durchführen einer gemeinsamen Detektion mit dem Eingangssignal, wobei das Kombinieren der Schätzungen des Nutzsignal-Frequenzversatzes und des Störer-Frequenzversatzes auf der gemeinsamen Detektion basiert.

6. Verfahren nach Anspruch 4, wobei das Eingangssignal ein gleichstromkompensiertes Signal, ein Minimalphasenkanal-Impulsantwortsignal, ein gefiltertes Signal und ein hartes Schätzsignal umfasst, und wobei das Schätzen des Nutzsignal-Frequenzversatzes auf dem Minimalphasenkanal-Impulsantwortsignal, dem gefilterten Signal und dem harten Schätzsignal basiert, das Schätzen des Störer-Frequenzversatzes auf dem gleichstromkompensierten Signal basiert, und das Schätzen des Träger-zu-Interferenz-Verhältnisses auf dem gleichstromkompensierten Signal basiert.

7. Benutzereinrichtung (100), umfassend:

einen Empfänger (110) zum Empfangen eines Signals;
ein Frequenzversatz-Schätzsystem (140) nach einem der vorhergehenden Ansprüche 1-3.

8. Benutzervorrichtung nach Anspruch 7, ferner umfassend: eine automatische Frequenzkorrekturvorrichtung zum Durchführen einer automatischen Frequenzkorrektur; und eine automatische Zeitgebungskorrekturvorrichtung zum Durchführen einer automatischen Zeitgebungskorrektur.

9. Benutzervorrichtung nach Anspruch 7, ferner umfassend:
ein Gleichstromkompensationsmodul (120) zum Durchführen einer Gleichstromkompensation mit dem Signal, um ein gleichstromkompensiertes Signal bereitzustellen,
ein Signalverarbeitungsmodul (130) zum Verarbeiten des gleichstromkompensierten Signals, um ein Eingangssignal an das Frequenzversatz-Schätzsystem bereitzustellen.

## Revendications

1. Un système d'estimation de décalage de fréquence (1000), comprenant :

un premier estimateur de décalage de fréquence (1020) pour estimer un décalage de fréquence de signal souhaité d'un signal souhaité dans un signal d'entrée ;
un second estimateur de décalage de fréquence (1030) pour estimer un décalage de fréquence interférant d'un interférant dans le signal d'entrée ;
un indicateur de qualité de signal (1010) pour générer un indicateur de qualité de signal du signal d'entrée ; et
un combineur d'estimation de décalage de fréquence (1040) pour générer une estimation combinée de décalage de fréquence du signal d'entrée par combinaison des estimées du décalage de fréquence de signal souhaité et du décalage de fréquence d'interférant sur la base de l'indicateur de qualité du signal.

2. Le système d'estimation de décalage de fréquence selon la revendication 1, comprenant en outre :

un détecteur conjoint pour effectuer une détection conjointe sur le signal d'entrée ;
dans lequel le combineur d'estimation de décalage de fréquence combine les estimées du décalage de fréquence de signal souhaité et du décalage de fréquence d'interférant sur la base de la détection conjointe.

3. Le système d'estimation de décalage de fréquence selon la revendication 1, dans lequel le signal d'entrée comprend un signal compensé du continu, un signal de réponse impulsionnelle de canal de phase minimale, un signal filtré, et un signal d'estimation brute, et
dans lequel le premier estimateur de décalage de fréquence estime le décalage de fréquence de signal souhaité sur la base du signal de réponse impulsionnelle de canal de phase minimale, du signal filtré, et du signal d'estimation brute, le second estimateur de décalage de fréquence estime le décalage de fréquence sur la base du signal compensé du continu, et l'estimateur de ratio porteuse sur interférence estime le ratio porteuse sur interférence sur la base du signal compensé du continu.

**4.** Un procédé d'estimation de décalage de fréquence, comprenant :

la réception (S1300) d'un signal d'entrée ;
l'estimation (S1320) d'un décalage de fréquence de signal souhaité sur un signal souhaité dans le signal d'entrée ;
l'estimation (S1330) d'un décalage de fréquence d'interférant sur un interférant dans le signal d'entrée ;
la génération (S1340) d'un indicateur de qualité de signal du signal d'entrée ; et
la combinaison (S1350) des estimées du décalage de fréquence de signal souhaité et du décalage de fréquence d'interférant pour générer une estimation combinée de décalage de fréquence pour le signal d'entrée sur la base de l'indicateur de qualité de signal.

**5.** Le procédé selon la revendication 4, comprenant en outre :

l'exécution d'une détection conjointe sur le signal d'entrée,
dans lequel la combinaison des estimées du décalage de fréquence de signal souhaité et du décalage de fréquence d'interférant est basée sur la détection conjointe.

**6.** Le procédé selon la revendication 4, dans lequel le signal d'entrée comprend un signal compensé du continu, un signal de réponse impulsionnelle de canal en phase minimale, un signal filtré et un signal d'estimation brute, et dans lequel l'estimation du décalage de fréquence de signal souhaité est basée sur le signal de réponse impulsionnelle de canal en phase minimale, le signal filtré et le signal d'estimation brute, l'estimation du décalage de fréquence d'interférant est basée sur le signal compensé du continu, et l'estimation du ratio porteuse sur interférence est basée sur le signal compensé du continu.

**7.** Un équipement utilisateur (100) comprenant :

un récepteur (110) pour recevoir un signal ;
un système d'estimation de décalage de fréquence (140) tel que défini dans l'une des revendications précédentes 1 à 3.

**8.** L'équipement utilisateur selon la revendication 7, comprenant en outre :

un dispositif de correction automatique de fréquence pour effectuer une correction automatique de fréquence ; et
un dispositif de correction automatique de séquencement pour effectuer une correction automatique du séquencement.

**9.** L'équipement utilisateur selon la revendication 7, comprenant en outre :

un module de compensation du continu (120) pour effectuer une compensation du continu sur le signal afin de produire un signal compensé du continu,
un module de traitement du signal (130) pour traiter le signal compensé du continu pour délivrer un signal d'entrée au système d'estimation de décalage de fréquence.

**Figure 1**

100

RF
110

DC
Compensation
120

Signal
Processing
130

$x(n)$

FOE
140

$\Delta \hat{f}$

$cir\_est$

$sout(n)$

200

wanted signal
frequency offset
estimator 220

FOE$_{WS}$

CIR

Input signal x(n)

CIR estimator 210

frequency offset
estimation
combiner 240

FOE

interferer
frequency offset
estimator 230

FOE$_{IF}$

Figure 2

**Figure 3**

$g(n)$ ──────▶

$\tilde{x}(n)$ ──────▶ ┌─────────────────┐
$hout(n)$ ──────▶ │ wanted signal   │
                      │ frequency offset│
                      │ estimator 420   │
                      └─────────────────┘

FOE$_{WS}$

CIR

$w(n)$ ──────▶ ┌─────────────────┐   ┌─────────────────┐  FOE
               │ CIR estimator 410│──▶│ frequency offset │──▶
               └─────────────────┘   │ estimation       │
                                     │ combiner 440     │
                                     └─────────────────┘

┌─────────────────┐  FOE$_{IF}$
│ the interferer  │
│ frequency offset│
│ estimator 430   │
└─────────────────┘

**Figure 4**

FOE Performance in CCI

Figure 5

EP 3 078 227 B1

**Figure 6**

**Figure 7**

Figure 8

**Figure 9**

1000

wanted signal
frequency offset
estimator 1020

FOE$_{ws}$

Input signal x(n)

signal quality
indicator generator
1010

frequency offset
estimation
combiner 1040

FOE

interferer
frequency offset
estimator 1030

FOE$_{IF}$

Figure 10

1100

wanted signal frequency offset estimator 1120     FOE$_{ws}$

$\hat{h}_{ws}(n)$

$\hat{s}_{ws}(n)$

Input signal $x(n)$

joint detector 1110

$fqual_{ws}$

$W_{ws}, W_{if}$

frequency offset estimation combiner 1140    FOE

$fqual_{if}$

$\hat{s}_{if}(n)$

$\hat{h}_{if}(n)$

interferer frequency offset estimator 1130

FOE$_{if}$

**Figure 11**

S1210 | receiving an input signal

S1220 | estimating a wanted signal frequency offset

S1230 | estimating an interferer frequency offset

S1240 | estimating a carrier to interference ratio

S1250 | combining the estimates of the wanted signal frequency offset and the interferer frequency offset based on the carrier to interference ratio

**Figure 12**

S1310 | receiving an input signal

S1320 | estimating a wanted signal frequency offset

S1330 | estimating an interferer frequency offset

S1340 | generating a signal quality indicator

S1350 | combining the estimates of the wanted signal frequency offset and the interferer frequency offset based on the signal quality indicator

**Figure 13**

| | |
|---|---|
| S1410 | receiving an input signal |
| S1420 | estimating a wanted signal frequency offset |
| S1430 | estimating an interferer frequency offset |
| S1440 | performing a joint detection |
| S1450 | combining the estimates of the wanted signal frequency offset and the interferer frequency offset based on the joint detection |

**Figure 14**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1332554 B1
- EP 1453211 B1

- US 2009115914 A1

**Non-patent literature cited in the description**

- **H. ARSLAN et al.** Adaptive Joint Detection of Cochannel Signals for TDMA Handsets. *IEEE Transactions on Communications,* vol. 52 (10), 1722-1732